# NEW EUROPEAN PATENT SPECIFICATION

(11) **EP 0 458 563 B2**
(45) Date of publication and mention of the opposition decision: **18.07.2001**
(45) Mention of the grant of the patent: 10.07.1996
(21) Application number: 91304533.2
(22) Date of filing: 20.05.1991
(51) Int. Cl.: H04Q 7/32, H04B 7/26, G08B 3/10, H04M 1/274

(54) **A multi-function telephone apparatus**
Multifunktionaler Telefonapparat
Appareil téléphonique multifonction

(30) Priority: 21.05.1990 FI 902504
(43) Date of publication of application: 27.11.1991
(73) Proprietor: NOKIA MOBILE PHONES LTD., 24101 Salo (FI)
(72) Inventor: Lahtinen, Pekka Ilmari, SF-02700 Kauniainen (FI)
(74) Representative: Frain, Timothy John

(56) References cited:
- EP-A- 0 461 571
- DE-A- 3 446 606
- US-A- 4 747 122
- US-A- 4 924 496
- ERICSSON REVIEW. vol. 65, no. 4, 1988, STOCKHOLM SE pages 144 - 151; S.KILANDER ET AL.: 'BCS 150 - A Digital Business Communications System'

## Description

### Description

The invention relates to a telephone apparatus which is made up of a telephone part, specifically a radio telephone part, which comprises at least a memory unit for storing a telephone number or numbers, a first electrical circuit for forming an outgoing telephone call according to a number in the register, a display and a keyboard, and of a receiver part for receiving alphanumeric messages and for displaying them in the said display. The invention thus relates to semiautomatic operation of a radio telephone apparatus, the apparatus performing certain functions automatically when its user so orders. In other words, the user of the radio telephone apparatus may press certain keys in the apparatus and thereby cause a certain function included in the invention to take place.

It is known to connect certain auxiliary devices to a telephone in order to improve its usability. For example, in publication EP-196 815, a telephone apparatus is connected to a personal computer in such a manner that, if it is desired in the course of a telephone call either to receive or to transmit alphanumeric messages, the computer switches automatically to the mode suitable for relaying this text message and then back to the speech mode. By means of this arrangement, speech communication and data communication can be caused to alternate during the same telephone call, without the necessity of making another telephone call with a modem, as in conventional arrangements. This apparatus is, however, relatively large in size even if the smallestsize computers on the market are used, and in any case the use of the apparatus requires a number of keyboard operations, so that it is not suitable for use, for example, in connection with radio telephones in automobiles or in other vehicles.

Another combination of a telephone and a computer is disclosed in publication WO-87/01256, in which a facility for data communication is provided in a telephone, this facility enabling the telephone to be used for calling a data bank, for searching from there a telephone number as if from a manual telephone directory, and for transferring the telephone number found into the register in the telephone, whereafter the data bank connection is disconnected and the telephone will be able to call this selected and stored telephone number automatically. This arrangement is thus usable only in cases in which the data bank is transmitting precisely the telephone number to which the apparatus is capable of placing a call. The apparatus is not capable of analyzing more complicated and more muddled messages.

"US 4747122, over which the claims are characterised, describes a paging call back system which permits telephone numbers received with a radio paging unit to be responded to using a mobile phone. The system includes a standard radio pager and a mobile phone. On receipt of a radio broadcast paging signal which includes data representing a telephone number, the radio pager operates to generate data representing that telephone number and to use that data to display that telephone number on a display of the pager. In addition, this data is supplied to a logic circuit which verifies that valid data representing a telephone number has been received. The logic circuit stores verified data in a memory and activates an indicator. The user may activate a control switch to transfer the data from the memory to an automatic dialer. The display of the pager may also display other alpha-numeric information, such as the time and date of the message.

According to a first aspect of the present invention there is provided a cellular radio telephone as claimed in claim 1.

According to a first second of the present invention there is provided a cellular radio telephone as claimed in claim 3.

According to a third aspect of the present invention there is provided a method for use in a cellular radio telephone as claimed in claim 8.

The present invention is denned in the appended claims and provide, particularly for a radio telephone apparatus, an arrangement which is capable of receiving alphanumeric so-called text messages either from a voice channel or from a paging network or the like and is capable of processing a text message which has arrived and may contain telephone numbers to which the receiver should place a call and other messages which do not relate to a telephone number, in such a manner that the necessary telephone number or numbers can be picked out from the rest of the message. The invention may also provide an arrangement of the type described above, wherein the potential telephone number can be corrected or supplemented, for example with an area code, and be stored, when necessary, for further use in a possible memory in the radio telephone apparatus. The invention may further provide an arrangement of the type described above, wherein a radio telephone apparatus is capable of placing a call immediately or later to a telephone number picked out from a message. The invention may still further provide an arrangement of this type, the use of which requires as little attention and as few key operations as possible and which is thus suitable for use in, for example, automobile radio telephones.

With the help of the apparatus according to the invention, a crucial improvement is accomplished with respect to the disadvantages described above.

It can be deemed to be the most important advantage of the invention that the apparatus is capable of interpreting as a telephone number a character string included in an arbitrary text message, either automatically or aided by the user, and this number can, when necessary, be modified, and the apparatus according to the invention is capable of calling this number, when necessary. It is a further advantage of the invention that such use of the apparatus does not require significant concentration by the user, such as reading a number from a display and memorizing it, or a considerable quantity of key operations, and that the apparatus can be made so small in size that it can be connected to telephone apparatuses available, without substantially increasing their size.

The invention is described below in greater detail, with reference to the accompanying figures.
Figure 1 depicts a network in which the apparatus combinations according to the invention can operate;
Figure 2 depicts schematically an apparatus combination according to the invention;
Figure 3 depicts one method according to the invention for locating a telephone number in a text message;
Figure 4 depicts schematically another method for locating a telephone number in a text message.

'Radio telephone apparatus' or 'telephone apparatus' here denotes a radio telephone apparatus or respectively a telephone apparatus which is capable of receiving text messages. These include at least
- the cellular radio telephones of the future GSM network (PLMN),
- the (cellular) radio telephones of other networks, if the network provides as one service also the relaying of text messages, and
- any radio telephones, if both a radio telephone and a paging network pager capable of receiving alpha-numeric messages are incorporated into the same apparatus.

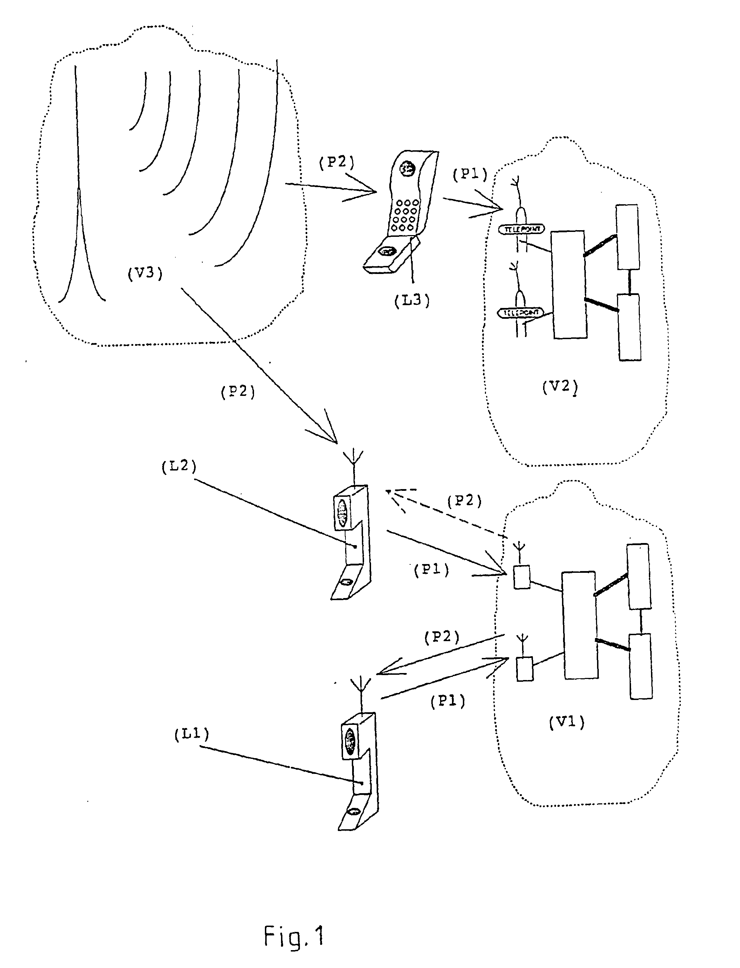

The technological background of the invention is shown in the main in Figure 1, which depicts the communication networks and potential devices with their subscriber lines.

There exist at least the following networks based on radio technology:
V1) mobile telephone networks, which are often cellular-based,
V2) networks of wireless telephones, which are based on support stations at home, in firms, or at public service facilities ("Telepoint"), and
V3) paging networks, which are based on regional broadcasting of paging messages within a certain geographical area.

These networks offer, for example, the following services from the viewpoint of terminal apparatuses operating in the network:
P1) forming an outgoing call, i.e. a call to a certain telephone number - in networks V1 and V2, within the area of the support station, and
P2) reception of text messages, i.e. bringing a short alphanumeric message, coming from the network, into the memory of the terminal apparatus - of the V1 networks the future PLMN network according to GSM recommendations, and several V3 networks, but there is nothing to prevent such service in any V1 network.

The following types of terminal apparatuses are operating or can operate in these networks:
L1) a mobile telephone which operates in a V1 network and utilizes its services P1 and P2,
L2) a combined mobile telephone and pager, which operates in a V1 network and utilizes its service P1 and possibly also P2,
   or operates in a V3 network and utilizes its service P2,
L3) a combination of a wireless telephone and a pager which operates in a V2 network and utilizes its service P1, or operates in a V3 network and utilizes its service P2.

These three apparatus types L1, L2 and L3 are referred to in this application as 'radio telephone apparatuses', which is hereinafter abbreviated RPK. Whatever is described below regarding an RPK is to be conceived to apply wherever applicable also to a telephone apparatus in connection with a conventional telephone network. Each RPK has the following properties:
01) an RPK can form outgoing telephone calls with the help of the service P1 and
02) an RPK can receive into its memory short alphanumeric messages with the help of the service P2.

Figure 1 illustrates the RPKs L1, L2 and L3, to which the present invention relates and which thus all have the properties 01 and 02.

At present the so-called GSM recommendations on which the future PLMN mobile telephone network will be based are subject to international standardization. The mobile telephones of this network will have, of course, the property (01) and additionally the property (02), since the network will provide the service P2 in the following two ways:
pp) point-to-point short message service, according to which both the mobile telephone apparatuses and other devices can transmit short messages to designated mobile telephones, and
cb) cell broadcast short message service, according to which the network operator or any other producer of data can transmit short messages to all radio telephones within a certain (audibility) area.

The service (pp) will most likely be used in the manner of paging, for example for transmitting telephone call requests to users of mobile telephones, and with the help of the service (cb) the network operators will distribute information which backs up the use of a telephone, for example telephone numbers of hotel reservation services and tourist information services, besides other generally useful information.

The standardization and implementation also of both wireless telephone networks V2 and paging networks V3 are progressing at a rapid rate. Since calls cannot be made to wireless telephones, the normal equipment of a telephone user will be both a wireless telephone apparatus and a pager. This will sooner or later most likely lead to the integration of a wireless telephone apparatus and a pager into one apparatus. Also, it is probable that specifically requests for calls will be mediated to the users of wireless telephones via a paging network. Respectively, a pager can probably be integrated into mobile telephone apparatuses which otherwise do not contain the facility for receiving messages (i.e. most mobile telephone networks older than the PLMN network). To summarize the situation, it can be forecast that in the near future there will be at least RPKs L1 and L3, and probably also RPKs L2.

Furthermore, it can be stated that the messages received by RPKs will typically include telephone numbers to which the user of an RPK is requested to place calls. In the present application, by 'text communication', text message' or 'alphanumeric message', etc., is meant a message which may contain telephone numbers and/or other text based on the alphabet or other numeric data. A message made up of a telephone number alone is not here included in the concept alphanumeric.

Radio telephone apparatuses L1, L2 and L3 thus receive text messages which besides other text also include telephone numbers to which the user of an RPK is requested to call.

How will the RPK user proceed when desiring to make a call to a telephone number included in a text message?

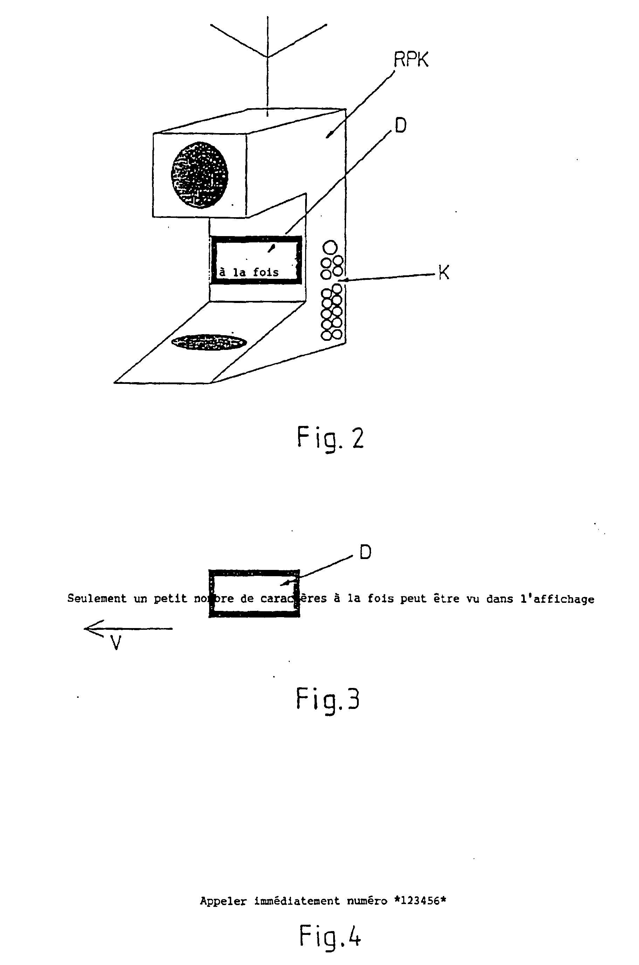

Typically an RPK is capable of displaying text messages to its user, for example by scrolling them through a short display D in the manner indicated in Figure 2. Without this invention, the user would have to record the telephone numbers from the display either in his memory or on paper, which would typically require scrolling the text through the display several times. This is cumbersome, and even dangerous if the RPK is being used when driving an automobile. In order to select a telephone number the user would thereafter have to key the telephone number into his RPK, which is cumbersome, prone to errors, and dangerous when done while driving an automobile. In order to store the telephone number in a short-selection directory possibly included in his RPK, the user would have to key into his RPK both the telephone number and the name to be given to it in the short-selection directory, such short-selection directories being not described in the present application.

According to the present invention, a call to a telephone number contained in a text message would take place in the following principal steps:
(1) The RPK searches out a telephone number contained in the message,
(2) the user accepts the number, and
(3) the RPK makes a call to the number.

Alternatively, the telephone number can be stored in a short-selection directory included in the RPK, which would take place in the following principal steps (two of which are the same as above):
(1) The RPK searches out a telephone number contained in the message,
(2) the user accepts the number,
(4) The RPK searches from the message the name under which the number is to be recorded, and
(5) the RPK stores the number under the name in the directory.

The principal steps (1)... (5) presented are specified below:

Typically an RPK has a display D, which is capable of displaying at one time at minimum about twenty characters of a text message and through which a text message can be scrolled. Also, an RPK has a keyboard K, and the user can give commands to the RPK by pressing the keys in the keyboard.

Hereinafter, 'keying' denotes a command given by means of the keyboard K - it may be the pressing of an individual key, a sequence of pressings of keys, or the pressing of several keys simultaneously, or possibly a command spoken aloud, if the RPK supports voice recognition, or any other method of giving a command. According to the invention, the user may select one text message received, or stored for that purpose in the temporary memory, for display at one time and for processing in the manner according to the present invention. The message thus selected is called 'present message'.

The functions presented below are merely examples of the operation of the RPK, there being also other operating facilities within the scope of the invention.

### (1) The RPK searches for a telephone number contained in a message

While the present message is being displayed, the user performs a number search keying, whereupon the RPK will search, starting from the beginning of the message, for the first point at which there is, for example, a numeral and the numeral is followed by at least four of any of the characters included in the following set: numerals, -, /, (, ), space. At least three of these first five characters must be numerals. In other words, the RPK searches for a point which could be a telephone number. Generally, the RPK thus searches from the message a character string which could be a telephone number. There may be various criteria for the character string, and they are not discussed separately in the present application; it is only stated that character string criteria can be formed. They depend, for example, on the country, the language, the practice, etc.

The point thus found is halted in the RPK display.

If no number is found, a text indicating this will be displayed ("No number found", or the like).

Another alternative for searching for a number is that the user keys the RPK to scroll the present message through the display D from the beginning to the end, in which case the user can, upon noticing a telephone number in the message, halt the display at this point. Figure 3 depicts such a method, in which the text is scrolled in the direction of arrow V. In other words, a moving text is, in a way, looked at through a "window" made up of the display. The scrolling may be either continuous, i.e. constantly moving, or periodical, in which case, for example text passages having the length of the display are shown successively. Linked with the method of use there is also the facility that after the halting the user can move the text, for example, one character at a time, to the left or right, in order to focus the correct point in the display.

A third method is that, already at the time of transmitting the message, the telephone number to which the user should make a call is separated by some suitable special character on the basis of which the RPK will unambiguously discriminate the number. Figure 4 depicts one such implementation, in which an asterisk is used as the recognition character. In this case the RPK will thus search, after the search keying, for a character string delimited by asterisks, and will then display it in the display D.

In the search for a telephone number from a text message it is possible to apply, according to the user's choice, any of the methods described above or some other search algorithm which has been programmed according to the invention into the RPK. An RPK can be programmed to implement the search by different methods in succession, for example first to check in the said third manner whether or not there is a number, then in the first manner, and last in the second manner, depending on whether or not a number is found.

### (2) The user accepts the number

This step will follow only after step (1) above. The objectives are two: either to accept the number or to search a new candidate for a telephone number or the next number in a message containing several numbers, and to correct a telephone number, for example in order to add or to remove an area code. As a result of this step there will be available a telephone number for the steps next in succession.

If the user does not accept a number found, he performs a "search for the next" keying or, depending on the programming, repeats the number search keying, whereupon the RPK will search for a new number by the selected method as in step (1), but continuing after the previously found number instead of starting from the beginning of the message.

If the user accepts the number he performs an acceptance keying, whereupon the RPK will eliminate from the display any characters following the number and any non-numeric characters inside the number. Now there is visible in the display only a "pure" telephone number, and this number is also in the number register, according to which further procedures are possible.

The user may correct the telephone number by adding or eliminating digits at the beginning of the telephone number, for example as follows. The first number digit of the telephone number is eliminated by keying delete. A digit is added to the beginning of a telephone number by pressing a number key. Other correction points and methods can also be programmed, but there may be less need for them.

In practice the possibilities for correcting a telephone number, mainly for adding or eliminating area codes, depend on the network, the practice, and the rest of the intelligence of the RPK. The ideal would be always to give the numbers complete, in the form +country code-number, and the RPK having the capacity to select the necessary portion from this.

This step may be followed by step (3) or step (4).

### (3) RPK makes a call to the number

This step will begin only when the number to be used is in the register and in the display as a consequence of step (2).

The objective is that the register and the display of the telephone are now precisely the same as they would be upon the user having fed in the telephone number in its entirety and conventionally, by means of the number keys. A call to a number also takes place in the same manner as in a "normal" call. If a "normal" telephone number is relayed to the exchange one digit at a time (as in a conventional telephone apparatus), some call keying is, of course, necessary for starting the placing of a call.

After a call or an attempt to place call and a possible after-processing of the telephone number (steps 4 and 5), it is possible to return to the processing of the present message by performing a return keying. Alternatively, the user may, if he so desires, return in some other manner to the processing of the messages stored in the temporary memory.

### (4) The RPK searches from the message the name under which the number will be stored

This step will start only when the number being used is in the register and in the display as a consequence of step (2), regardless of whether or not the telephone number concerned has already been called.

The user performs a name search keying, whereupon the RPK will display the beginning of the present message. With the subsequent name search keyings the text will be moved forward in the display one word at a time. When the correct name is at the beginning of the display, the user performs an acceptance keying. Thereafter he may eliminate characters from the beginning of the display by delete keyings. Even other correction possibilities can be programmed, but there may be little need for them.

One altemative for this step is to feed the name directly into the RPK, as is done even otherwise in updating the short-selection directory in a manner known per se.

### (5) The RPK stores the number under a name in the directory

After step (4) the number to be used is in the RPK register and the name is in the display. The user performs a store keying, whereupon the number will be stored under the name in the short-selection directory.

In practice, steps (4) and (5) resemble a "conventional" method of feeding name & number pairs into the short-selection directory.

The algorithms presented above are, of course, only one embodiment example of the invention.

The functions described above, of course, require that the apparatus has the corresponding circuits for the present message of the temporary memory, the appropriate special keys, or a circuit by which the functioning of the conventional keys is temporarily converted to one required by the invention, and possibly switch means for changing the modes of function.

For example, the following circuits and switch means may be provided:-
1. A first electrical circuit for forming an outgoing call in accordance with a number in the memory or register.
2. A second electrical circuit for displaying in the display a telephone number possibly included in the present message temporarily stored in the memory.
3. A third circuit, connected to the keyboard, for transferring the telephone number in the display at each given time to the memory for forming a call and/or for further processing.
4. A fourth circuit, which can be pre-programmed to recognize characters indicating the beginning and/ or end of a telephone number possibly included in the alphanumeric present message or, alternatively, to recognize from the alphanumeric present message a character string which, according to the programmed algorithm, is probably a telephone number, this fourth circuit then transferring the found number, or character string, to the display for the purpose of being assessed by the user.
5. A fifth circuit which can be pre-programmed to scroll in the display an alphanumeric present message which is in the temporary memory, either continuously or in sequences in portions depending on the length of the display, this fifth circuit being connected to the keyboard in such a manner that the user can by means of the keyboard halt in the display the desired portion of this message which is being scrolled.
6. A sixth circuit, connected to the keyboard, by means of which circuit the user can, with the help of a certain key or keys, select for operation the desired one of the said telephone number tracing methods pre-programmed in the fourth and fifth circuits, the keyboard including an acceptance key by means of which the user can accept a portion of the present message in the display and transfer this portion to the memory in the case of a telephone number, or to a short-selection directory in the case of a name or the like.
7. A seventh circuit connected to the keyboard, and a program installed in the circuit by means of which the user may supplement or correct the alphanumeric present message in the memory and in the display.
8. Switch means which connect the temporary memory either to a voice channel or to a short-message channel to store the alphanumeric message for further processing, depending on the channel from which the message comes, the switch means operating either automatically on the basis of the incoming signal, or according to keying by the user.

Although both radio telephones and telephones operating with cable connections, which may be of the described types L1, L2, L3, have been described above, since the invention can be applied to all of them, it is understandable that the most important application is specifically a radio telephone and in particular type L1. The reason is that the ease and safety of operating have substantial significance only as regards mobile telephones, since, when using a fixed telephone, it is easy and safe, for example, to take notes, whereas it is not so, for example, in a moving automobile, as was stated also in the definition of the objects of the invention. Furthermore, it is uncertain and questionable whether or not conventional telephone networks will have the described service P2 otherwise than through a paging network V3 even if telephones P1 do exist. Especially as regards a radio telephone apparatus L1, i.e. a GSM cellular radio telephone, the said circuits, memories, etc. can easily and appropriately be integrated into one entity with the telephone. Also, if the radio telephone apparatuses L2 and L3 are made as one apparatus, these circuits, memories, etc. can be constructed within one and the same casing with them or, especially as regards apparatus L3, they can also be conceived in the form of an auxiliary device.

## Claims

1. A telephone appartaus (RPK) which is made up of a telephone part, in particular a radio telephone part, comprising:
a memory unit for storing a telephone number or telephone numbers;
a first electrical circuit for forming an outgoing call in accordance with a number in the memory unit;
a display (D) for displaying text including numbers and other text based on the alphabet;
a keyboard (K);
a radio receiver part for receiving messages including a telephone number and for displaying them in the said display;
a third circuit, connected to the keyboard, for transferring the telephone number in the display at each given time to the memory unit for forming a call and/or further processing;
characterised in that the telephone apparatus is a cellular radio telephone, in that
the radio receiver part is for receiving arbitrary alphanumeric messages, having text including a telephone number and other text based on the alphabet and for displaying the text in the said display
and in that the cellular radio telephone additionally includes:
a memory for temporary storage of an incoming alphanumeric message in its entirety;
a second electrical circuit for displaying in the said display a telephone number possibly included in the present message temporarily stored in the memory; and
a fourth circuit for searching text of the received arbitrary alphanumeric message temporarily stored in the memory to identify a telephone number and transferring the found telephone number to the display from where it may be transferred by the third circuit to the memory unit for forming a call and/or further processing, wherein the text of the received alphanumeric message includes a telephone number and other text based on the alphabet, and the text of the received alphanumeric message, including the telephone number and other text based on the alphabet, is displayable on the display.

2. A cellular radio telephone according to Claim 1, characterised in that the fourth circuit is operable to recognise characters indicating the beginning and/or end of a telephone number possibly included in the alphanumeric present message, or alternatively to recognise from the alphanumeric present message a character string which, according to a programmed algorithm, is probably a telephone number.

3. A telephone appartaus (RPK) which is made up of a telephone part, in particular a radio telephone part, comprising:
a memory unit for storing a telephone number or telephone numbers;
a first electrical circuit for forming an outgoing call in accordance with a number in the memory unit;
a display (D) for displaying text including numbers and other text based on the alphabet;
a keyboard (K);
a radio receiver part for receiving messages including a telephone number and for displaying them in the said display;
a third circuit, connected to the keyboard, for transferring the telephone number in the display at each given time to the memory unit for forming a call and/or further processing;
characterised in that the telephone apparatus is a cellular radio telephone, in that
the radio receiver part is for receiving arbitrary alphanumeric messages, having text including a telephone number and other text based on the alphabet and for displaying the text in the said display
and in that the cellular radio telephone additionally includes:
a memory for temporary storage of an incoming alphanumeric message in its entirety;
a second electrical circuit for displaying in the said display a telephone number possibly included in the present message temporarily stored in the memory; and
a fifth circuit which can be pre-programmed to scroll in the display an alphanumeric present message having text including a telephone number and other text based on the alphabet which is in the temporary memory, either continuously or in sequences in portions depending on the length of the display, and that this fifth circuit is connected to the keyboard in such a manner that the user can by means of the keyboard halt in the display the desired portion of this message which is being scrolled thereby displaying a telephone number for transfer by the third circuit to the memory unit for forming a call and/or further processing.

4. A cellular radio telephone according to Claim 2 or 3, characterised in that it includes a sixth circuit, connected to the keyboard, by means of which circuit the user can, with the help of a certain key or keys, select for operation the desired one of the said telephone number tracing methods pre-programmed in the fourth and fifth circuits, and that the keyboard includes an acceptance key by means of which the user can accept a portion of the present message in the display and transfer this portion to the memory unit in the case of a telephone number, or to a short-selection directory in the case of a name or the like.

5. A cellular radio telephone according to any of the preceding claims,
characterised in that it further includes a seventh circuit connected to the keyboard, and a program installed in the circuit, by means of which the user may supplement or correct the alphanumeric present message in the memory unit and in the display.

6. A cellular radio telephone according to any of the preceding claims,
characterised in that it includes switch means which connect the said temporary memory either to a voice channel or to a short-message channel to store the alphanumeric message for further processing, depending on the channel from which the message comes, and that the switch means operate either automatically on the basis of the incoming signal or, alternatively, according to keying by the user.

7. A celular radio telephone according to any of the preceding claims,
characterised in that the said temporary memory, the second, third, fourth, fifth, sixth and seventh circuits, the acceptance key, and the said switch means, or a combination of any of these, alternatively constitute a structural part integrated into a cellular radio telephone, in particular a GSM network cellular radio telephone, or is constructed as a separate structural part or auxiliary device to be connected to a radio telephone and/or a personal pager.

8. A method for use in a telephone apparatus which is made up of a telephone part comprising a memory unit, a circuit for forming an outgoing call, a display for displaying text including numbers and other text based on the alphabet, a keyboard, and a radio receiver part for:
receiving messages including a telephone number; and
for processing a received message electronically,
characterised in that the telephone apparatus is a cellular radio telephone, in that the radio receiver part is for receiving, for display, arbitrary alphanumeric messages wherein the text of the received alphanumeric message includes a telephone number and other text based on the alphabet; and
in that the processing of the received present message is made up of at least the following steps:
(1) the telephone apparatus searches out one at a time from the telephone number strings possibly contained in the text of the received alphanumeric message, and displays the found telephone number string in the display
(2) the user by keying either rejects or accepts the found telephone number displayed in the display
(3) the telephone apparatus places a call to the accepted telephone number accepted in the preceding step.

9. A method according to Claim 8, characterised in that the said telephone number search step implemented by the telephone apparatus includes as alternative search methods:
a) the picking out of a telephone number discriminated and recognised on the basis of certain predetermined characters
b) the picking out of character string alternatives formed by predetermined characters in accordance with programmed algorithms
c) the scrolling of an alphanumeric message through the display, in which case the user may, by keying, halt a telephone number in the display.

10. A method according to Claim 9, characterised in that the user may select, by keying, a one desired from among the predetermined search methods, or alternatively, a successive chain of the various search methods has been programmed into the telephone apparatus.

11. A method according to Claim 8, characterised in that the said telephone number acceptance-rejection step additionally includes a step in which the user may correct and supplement the telephone number series in the display.

12. A method according to Claim 8, characterised in that the method additionally comprises, after the said acceptance step, a step wherein the telephone number, on the basis of the user's keying, is stored in the memory unit as a part of the short-selection directory according to either a code keyed in by the user or a code searched out by the telephone apparatus from the message.

## Patentansprüche

1. Telefonapparat (RPK) aus einem Telefonteil, insbesondere einem Funktelefonteil mit:
- einer Speichereinheit zum Einspeichern einer Telefonnummer oder von Telefonnummern;
- einer ersten elektrischen Schaltung zum Erstellen eines herausgehenden Anrufs entsprechend einer Nummer in der Speichereinheit;
- einer Anzeige (D) zum Anzeigen von Text einschließlich Zahlen sowie anderem Text auf Grundlage des Alphabets;
- einer Tastatur (K);
- einem Funkempfängerteil zum Empfangen von Meldungen einschließlich einer Telefonnummer und zum Anzeigen derselben in der Anzeige;
- einer dritten, mit der Tastatur verbundenen Schaltung zum Übertragen der Telefonnummer in der Anzeige zu einem gegebenen Zeitpunkt an die Speichereinheit, um einen Anruf und/ oder eine Verarbeitung zu tätigen;
**dadurch gekennzeichnet, dass** das Telefongerät ein Kleinzonen-Funktelefon ist, und dass
- der Funkempfängerteil zum Empfangen beliebiger alphanumerischer Meldungen dient, die einen Text einschließlich einer Telefonnummer und anderem Text auf Grundlage des Alphabets enthalten, und zum Anzeigen des Texts in der Anzeige; **und dass** das Kleinzonen-Funktelefon zusätzlich Folgendes aufweist:
- einen Speicher zum Zwischenspeichern einer eintreffenden alphanumerischen Meldung in ihrer Gesamtheit;
- eine zweite elektrische Schaltung zum Anzeigen einer möglicherweise in der aktuellen Meldung, die im Speicher zwischengespeichert ist, enthaltenen Telefonnummer in der Anzeige; und
- eine vierte Schaltung zum Suchen von Text der empfangenen beliebigen alphanumerischen, im Speicher zwischengespeicherten Meldung zum Erkennen einer Telefonnummer und zum Übertragen der aufgefundenen Telefonnummer an die Anzeige, von wo sie durch die dritte Schaltung an die Speichereinheit übertragen werden kann, um einen Anruf und/oder eine weitere Verarbeitung zu tätigen, wobei der Text der empfangenen alphanumerischen Meldung eine Telefonnummer und anderen auf dem Alphabet beruhenden Text enthält und wobei der Text der empfangenen alphanumerischen Meldung, einschließlich der Telefonnummer und dem anderen, auf dem Alphabet beruhenden Text in der Anzeige anzeigbar ist.

2. Kleinzonen-Funktelefon nach Anspruch 1, **dadurch gekennzeichnet,** dass die vierte Schaltung so arbeitet, dass sie Zeichen erkennt, die den Anfang und/oder das Ende einer möglicherweise in der vorliegenden alphanumerischen Meldung enthaltenen Telefonnummer erkennt, oder sie alternativ in der vorliegenden alphanumerischen Meldung eine Zeichenkette erkennt, die, gemäß einem programmierten Algorithmus, möglicherweise eine Telefonnummer ist.

3. Telefonapparat (RPK) aus einem Telefonteil, insbesondere einem Funktelefonteil mit:
- einer Speichereinheit zum Einspeichern einer Telefonnummer oder von Telefonnummern;
- einer ersten elektrischen Schaltung zum Erstellen eines herausgehenden Anrufs entsprechend einer Nummer in der Speichereinheit;
- einer Anzeige (D) zum Anzeigen von Text einschließlich Zahlen sowie anderem Text auf Grundlage des Alphabets;
- einer Tastatur (K);
- einem Funkempfängerteil zum Empfangen von Meldungen einschließlich einer Telefonnummer und zum Anzeigen derselben in der Anzeige;
- einer dritten, mit der Tastatur verbundenen Schaltung zum Übertragen der Telefonnummer in der Anzeige zu einem gegebenen Zeitpunkt an die Speichereinheit, um einen Anruf und/ oder eine Verarbeitung zu tätigen;
**dadurch gekennzeichnet, dass** das Telefongerät ein Kleinzonen-Funktelefon ist, und dass
- der Funkempfängerteil zum Empfangen beliebiger alphanumerischer Meldungen dient, die einen Text einschließlich einer Telefonnummer und anderem Text auf Grundlage des Alphabets enthalten, und zum Anzeigen des Texts in der Anzeige; **und dass** das Kleinzonen-Funktelefon zusätzlich Folgendes aufweist:
- einen Speicher zum Zwischenspeichern einer eintreffenden alphanumerischen Meldung in ihrer Gesamtheit;
- eine zweite elektrische Schaltung zum Anzeigen einer möglicherweise in der aktuellen Meldung, die im Speicher zwischengespeichert ist, enthaltenen Telefonnummer in der Anzeige; und
- eine fünfte Schaltung, die vorprogrammiert werden kann, um auf der Anzeige einer aktuellen alphanumerischen Meldung mit Text einschließlich einer Telefonnummer und anderem, auf dem Alphabet beruhendem Text, die sich im Zwischenspeicher befindet, entweder kontinuierlich oder in Abfolgen von Teilen abhängig von der Länge der Anzeige durchzurollen, und dass diese fünfte Schaltung auf solche Weise mit der Tastatur verbunden ist, dass der Benutzer mittels der Tastatur auf der Anzeige den gewünschten Teil dieser durchgerollten Meldung anhalten kann, um dadurch eine Telefonnummer zur Übertragung durch die dritte Schaltung an die Speichereinheit, um einen Anruf und/oder eine weitere Verarbeitung zu tätigen, anzuzeigen.

4. Kleinzonen-Funktelefon nach einem der Ansprüche 2 oder 3, **dadurch gekennzeichnet,** dass es eine sechste Schaltung enthält, die mit der Tastatur verbunden ist und mit dem der Benutzer mittels einer bestimmten Taste oder bestimmten Tasten eines der genannten Telefonnummer-Suchverfahren, die in der vierten und fünften Schaltung vorprogrammiert sind, für den Betrieb auswählen kann, und dass die Tastatur eine Akzeptiertaste enthält, durch die der Benutzer einen Abschnitt der vorliegenden Meldung in der Anzeige akzeptieren kann und diesen Abschnitt im Fall einer Telefonnummer an die Speichereinrichtung oder im Fall eines Namens oder dergleichen an ein Kurzwahlverzeichnis übertragen kann.

5. Kleinzonen-Funktelefon nach einem der vorstehenden Ansprüche, **dadurch gekennzeichnet,** dass es ferner eine mit der Tastatur verbundene siebte Schaltung und ein in dieser Schaltung vorhandenes Programm aufweist, durch die der Benutzer die vorliegende alphanumerische Meldung in der Speichereinheit und in der Anzeige ergänzen oder korrigieren kann.

6. Kleinzonen-Funktelefon nach einem der vorstehenden Ansprüche, **dadurch gekennzeichnet,** dass es eine Umschalteinrichtung enthält, die den Zwischenspeicher entweder mit einem Sprachkanal oder einem Kurzmeldungskanal verbindet, um die alphanumerische Meldung für weitere Verarbeitung, abhängig vom Kanal, von dem die Meldung herrührt, einzuspeichern, und dass die Umschalteinrichtung entweder automatisch auf Grundlage des eintreffenden Signals oder, alternativ, abhängig von einem Eintastvorgang durch den Benutzer arbeitet.

7. Kleinzonen-Funktelefon nach einem der vorstehenden Ansprüche, **dadurch gekennzeichnet,** dass der Zwischenspeicher die zweite, dritte, vierte, fünfte, sechste und siebte Schaltung, die Akzeptiertaste und die Umschalteinrichtung oder eine beliebige Kombination derselben alternativ ein in ein Kleinzonen-Funktelefon, insbesondere ein GSM-Netz-Kleinzonen-Funktelefon, eingebautes Bauteil bildet oder sie als gesondertes Bauteil oder Hilfsvorrichtung aufgebaut ist, die mit einem Funktelefon und/oder einer Personenrufeinrichtung verbindbar ist.

8. Verfahren zur Verwendung in einem Telefonapparat, der aus einem Telefonteil mit einer Speichereinheit, einer Schaltung zum Errichten eines herausgehenden Anrufs, einer Anzeige zum Anzeigen von Text einschließlich Nummern und anderem, auf dem Alphabet beruhenden Nummern und anderem, auf dem Alphabet beruhendem Text, einer Tastatur und einem Funkempfängerteil besteht, um Meldungen einschließlich einer Telefonnummer zu empfangen und eine empfangene Meldung elektronisch zu verarbeiten, **dadurch gekennzeichnet**, dass der Telefonapparat ein Kleinzonen-Funktelefon ist, der Funkempfängerteil zum Empfangen, für Anzeigezwecke, beliebiger alphanumerischer Meldungen dient, wobei der Text der empfangenen alphanumerischen Meldung eine Telefonnummer und anderen, auf dem Alphabet beruhenden Text enthält; und die Verarbeitung der empfangenen aktuellen Meldung zumindest mit den folgenden Schritten erfolgt:
(1) das Telefongerät sucht aus den Telefonnummernfolgen, die möglicherweise im Text der empfangenen alphanumerischen Meldung enthalten sind, jeweils eine heraus und zeigt die aufgefundene Telefonnummernfolge auf der Anzeige an;
(2) der Benutzer führt durch Eintippen eine Zurückweisung oder Annahme für die auf der Anzeige angezeigte aufgefundene Telefonnummer aus;
(3) das Telefongerät führt einen Anruf zur im vorangegangenen Schritt akzeptierten Telefonnummer aus.

9. Verfahren nach Anspruch 8, **dadurch gekennzeichnet,** dass der durch den Telefonapparat realisierte Telefonnummer-Suchschritt als alternative Suchverfahren die folgenden umfasst:
a) Herausgreifen einer Telefonnummer, die auf Grundlage bestimmter, vorgegebener Zeichen unterschieden ist und erkannt wurde;
b) Herausgreifen von Zeichenkettenalternativen, die gemäß programmierten Algorithmen durch vorgegebene Zeichen gebildet sind;
c) Durchrollen einer alphanumerischen Meldung durch die Anzeige, in welchem Fall der Benutzer eine Telefonnummer durch Eintasten in der Anzeige anhalten kann.

10. Verfahren nach Anspruch 9, **dadurch gekennzeichnet**, dass der Benutzer durch Eintasten das gewünschte unter den vorgegebenen Suchverfahren auswählen kann oder dass, alternativ, eine Aufeinanderfolge der verschiedenen Suchverfahren in den Telefonapparat einprogrammiert ist.

11. Verfahren nach Anspruch 8, **dadurch gekennzeichnet,** dass der Annahme-Zurückweisungs-Schritt für die Telefonnummer zusätzlich einen Schritt enthält, in dem der Benutzer die Telefonnummernreihe in der Anzeige korrigieren und ergänzen kann.

12. Verfahren nach Anspruch 8, **dadurch gekennzeichnet,** dass das Verfahren zusätzlich, nach dem Annahmeschritt, einen Schritt enthält, in dem die Telefonnummer auf Grundlage einer vom Benutzer ausgeführten Eintastung als Teil des Kurzwahlverzeichnisses in die Speichereinheit entweder entsprechend einem vom Benutzer eingetasteten Code oder entsprechend einem vom Telefonapparat aus der Meldung herausgesuchten Code eingespeichert wird.

## Revendications

1. Appareil téléphonique (RPK) qui est constitué d'une section de téléphone, en particulier une section de radiotéléphone, comprenant :
une unité de mémoire pour mémoriser un numéro de téléphone ou des numéros de téléphone ;
un premier circuit électrique pour former un appel sortant en conformité avec un numéro dans l'unité de mémoire ;
un affichage (D) pour afficher du texte incluant des chiffres et d'autre texte basé sur l'alphabet ;
un clavier (K) ;
une section de réception radio servant à recevoir des messages incluant un numéro de téléphone et servant à afficher ceux-ci sur ledit affichage,
un troisième circuit, connecté au clavier, pour transférer le numéro de téléphone dans l'affichage à chaque instant donné à l'unité de mémoire pour former un appel et/ou pour traitement ultérieur,
caractérisé en ce que l'appareil téléphonique est un radiotéléphone cellulaire, en ce que
la section de réception radio sert à recevoir des messages alphanumériques arbitraires, ayant du texte incluant un numéro de téléphone et d'autre texte basé sur l'alphabet et à afficher le texte sur ledit affichage,
et en ce que le radiotéléphone cellulaire comprend de plus :
une mémoire pour mémorisation temporaire d'un message alphanumérique entrant dans sa totalité ;
un second circuit électrique servant à afficher sur ledit affichage un numéro de téléphone probablement inclus dans le message présent mémorisé temporairement dans la mémoire ; et
un quatrième circuit pour chercher du texte du message alphanumérique arbitraire reçu et mémorisé temporairement dans la mémoire afin d'identifier un numéro de téléphone et transférer le numéro de téléphone trouvé à l'affichage d'où il peut être transféré par le troisième circuit vers l'unité de mémoire pour former un appel et/ou pour traitement ultérieur, dans lequel le texte du message alphanumérique reçu inclut un numéro de téléphone et d'autre texte basé sur l'alphabet, et le texte du message alphanumérique reçu, incluant le numéro de téléphone et d'autre texte basé sur l'alphabet, est affichable sur l'affichage.

2. Un radiotéléphone cellulaire selon la revendication 1,
caractérisé en ce que le quatrième circuit peut être mis en oeuvre pour reconnaître des caractères indiquant le début et/ou la fin d'un numéro de téléphone probablement inclus dans le message présent alphanumérique, ou en variante pour reconnaître à partir du message présent alphanumérique une chaîne de caractères qui, conformément à un algorithme programmé, est probablement un numéro de téléphone.

3. Appareil téléphonique (RPK) qui est constitué d'une section de téléphone, en particulier une section de radiotéléphone comprenant :
une mémoire pour mémoriser un numéro de téléphone ou des numéros de téléphone ;
un premier circuit électrique pour former un appel sortant en conformité avec un numéro dans l'unité de mémoire ;
un affichage (D) pour afficher du texte incluant des chiffres et d'autre texte basé sur l'alphabet ;
un clavier (K) ;
une section de réception radio servant à recevoir des messages incluant un numéro de téléphone et pour afficher ceux-ci sur ledit affichage,
un troisième circuit, connecté au clavier, servant à transférer le numéro de téléphone dans l'affichage à chaque instant donné à l'unité de mémoire pour former un appel et/ou pour traitement ultérieur,
caractérisé en ce que l'appareil téléphonique est un radiotéléphone cellulaire, en ce que
la section de réception radio sert à recevoir des messages alphanumériques arbitraires, ayant du texte incluant un numéro de téléphone et d'autre texte basé sur l'alphabet, et à afficher le texte sur ledit affichage,
et en ce que le radiotéléphone cellulaire comprend de plus :
une mémoire pour mémorisation temporaire d'un message alphanumérique entrant dans sa totalité ;
un second circuit électrique servant à afficher sur ledit affichage un numéro de téléphone probablement inclus dans le message présent mémorisé temporairement dans la mémoire ; et
un cinquième circuit qui peut être pré-programmé pour faire dérouler sur l'affichage le message présent alphanumérique, ayant du texte incluant un numéro de téléphone et d'autre texte basé sur l'alphabet, qui se trouve dans la mémoire temporaire, soit de manière continue, soit en séquence en sections, en fonction de la longueur de l'affichage, et en ce que ce cinquième circuit est connecté au clavier d'une manière telle que l'utilisateur peut au moyen du clavier arrêter le déroulement sur l'affichage à la partie désirée de ce message qui est en cours de déroulement ainsi affichant un numéro de téléphone pour transfert par le troisième circuit vers l'unité de mémoire pour former un appel et/ou pour traitement ultérieur.

4. Un radiotéléphone cellulaire selon la revendication 2 ou 3, caractérisé en ce qu'il comprend un sixième circuit, connecté au clavier, au moyen duquel circuit l'utilisateur peut, à l'aide d'une certaine touche ou de certaines touches, sélectionner pour actionnement un procédé de suivi de numéro de téléphone désiré parmi lesdits procédés de suivi de numéros de téléphone pré-programmé dans les quatrième et cinquième circuits et en ce que le clavier comprend une touche d'acceptation au moyen de laquelle l'utilisateur peut accepter une partie du message présent dans l'affichage et transférer cette partie à l'unité de mémoire dans le cas d'un numéro de téléphone ou dans un répertoire à sélection courte dans le cas d'un nom ou analogues.

5. Un radiotéléphone cellulaire selon l'une quelconque des revendications précédentes, caractérisé en ce qu'il comprend de plus un septième circuit connecté au clavier et un programme installé dans le circuit au moyen duquel l'utilisateur peut compléter ou corriger le message présent alphanumérique dans l'unité mémoire et dans l'affichage.

6. Un radiotéléphone cellulaire selon l'une quelconque des revendications précédentes, caractérisé en ce qu'il comprend un moyen de commutation qui connecte ladite mémoire temporaire soit à un canal vocal, soit à un canal à message court afin de mémoriser le message alphanumérique pour traitement ultérieur, en fonction du canal d'où le message et en ce que le moyen de commutation agit soit automatiquement, soit sur la base d'un signal entrant, soit, en variante, conformément à l'enfoncement d'une touche par l'utilisateur.

7. Un radiotéléphone cellulaire selon l'une quelconque des revendications précédentes, caractérisé en ce que ladite mémoire temporaire, les second, troisième, quatrième, cinquième, sixième et septième circuits, la touche d'acceptation et ledit moyen de commutation, ou une combinaison de l'un quelconque de ceux-ci, constitue alternativement une partie structurelle intégrée dans un radiotéléphone cellulaire, en particulier un radiotéléphone cellulaire du réseau GSM ou est construit comme une partie structurelle séparée ou dispositif auxiliaire qui doit être connecté à un radiotéléphone et/ou un récepteur d'appel de personnes.

8. Procédé pour l'utilisation dans un appareil téléphonique qui est constitué d'une section de téléphone comprenant une unité de mémoire, un circuit pour former un appel sortant, un affichage pour afficher du texte incluant des chiffres et d'autre texte basé sur l'alphabet, un clavier et d'une section de réception radio pour : recevoir des messages incluant un numéro de téléphone, et pour traiter un message reçu électroniquement,
caractérisé en ce que l'appareil téléphonique est un radiotéléphone cellulaire, en ce que la section de réception radio sert à recevoir, pour l'affichage, des messages alphanumériques arbitraires, dans lequel le texte des messages alphanumériques reçus inclut un numéro de téléphone et d'autre texte basé sur l'alphabet, et
en ce que le traitement du message présent reçu est constitué d'au moins les étapes suivantes :
(1) L'appareil téléphonique cherche une chaîne en une fois à partir d'une chaîne de numéros de téléphone contenus probablement dans le texte du message alphanumérique reçu, et affiche la chaîne de numéro de téléphone trouvée dans l'affichage
(2) L'utilisateur par l'enfoncement de touches soit rejette, soit accepte le numéro de téléphone trouvé affiché dans l'affichage, et
(3) L'appareil téléphonique effectue un appel avec le numéro de téléphone accepté dans l'étape précédente.

9. Procédé selon la revendication 8, caractérisé en ce que ladite étape de recherche de numéros de téléphone mise en oeuvre par l'appareil téléphonique comprend comme procédé de recherche en variante :
a) L'extraction d'un numéro de téléphone discriminé et reconnu sur la base de certains caractères prédéterminés
b) L'extraction d'une chaîne de caractères en variante formée par des caractères prédéterminés en conformité avec des algorithmes programmés
c) Le déroulement d'un message alphanumérique sur l'affichage, dans lequel cas l'utilisateur peut, en enfonçant la touche arrêt, arrêter le déroulement avec le numéro de téléphone dans l'affichage.

10. Procédé selon la revendication 9, caractérisé en ce que l'utilisateur peut sélectionner, par l'enfoncement d'une touche quelconque, un procédé de recherche désiré parmi les procédés de recherche prédéterminés ou en variante, une chaîne successive des divers procédés de recherche qui ont été programmés dans l'appareil téléphonique.

11. Procédé selon la revendication 8, caractérisé en ce que ladite étape d'acceptation-rejet du numéro de téléphone comprend de plus une étape dans laquelle l'utilisateur peut corriger et compléter la série de numéros de téléphone dans l'affichage.

12. Procédé selon la revendication 8, caractérisé en ce que le procédé comprend de plus ladite étape d'acceptation, une étape dans laquelle le numéro de téléphone, sur la base de l'enfoncement de touches par l'utilisateur, est mémorisé dans l'unité de mémoire comme une partie du répertoire à sélection courte conformément soit un code de touches entré par l'utilisateur, soit un code extrait par l'appareil téléphonique du message.
